(19) Europäisches Patentamt
European Patent Office
Office européen des brevets

(11) **EP 1 446 654 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(21) Anmeldenummer: **02803381.9**

(22) Anmeldetag: **19.11.2002**

(51) Int Cl.:
***G01N 21/64*** (2006.01)

(86) Internationale Anmeldenummer:
**PCT/EP2002/012938**

(87) Internationale Veröffentlichungsnummer:
**WO 2003/044495 (30.05.2003 Gazette 2003/22)**

(54) **VERFAHREN ZUR KORREKTUR DER GRÖSSE UND/ODER FORM EINES MESSVOLUMENS IN EINER CHEMISCHEN UND/ODER BIOLOGISCHEN PROBE**

METHOD FOR CORRECTING THE SIZE AND/OR SHAPE OF A MEASURING VOLUME IN A CHEMICAL AND/OR BIOLOGICAL SAMPLE

PROCEDE POUR CORRIGER LA TAILLE ET/OU LA FORME D'UN VOLUME DE MESURE DANS UN ECHANTILLON CHIMIQUE ET/OU BIOLOGIQUE

(84) Benannte Vertragsstaaten:
**AT BE BG CH CY CZ DE DK EE ES FI FR GB GR IE IT LI LU MC NL PT SE SK TR**

(30) Priorität: **23.11.2001 DE 10157511**

(43) Veröffentlichungstag der Anmeldung:
**18.08.2004 Patentblatt 2004/34**

(73) Patentinhaber: **Evotec AG**
**22525 Hamburg (DE)**

(72) Erfinder: **HUMMEL, Stefan**
**25489 Haseldorf (DE)**

(74) Vertreter: **von Kirschbaum, Alexander et al**
**Patentanwälte**
**von Kreisler Selting Werner**
**Deichmannhaus am Dom**
**Bahnhofsvorplatz 1**
**50667 Köln (DE)**

(56) Entgegenhaltungen:
**WO-A-00/46590      WO-A-99/47963**

EP 1 446 654 B1

**Beschreibung**

Die Erfindung betrifft ein Verfahren zur Korrektur der Größe und/oder Form eines Messvolumens in einer chemischen und/oder biologischen Probe, insbesondere bei der Fluoreszenz-Spektroskopie.

Die Untersuchung von Proben erfolgt häufig mit Hilfe von Mikroskopen oder ähnlichen geeigneten optischen Vorrichtungen. Hierbei werden die Proben beispielsweise auf Objektträgern oder anderen geeigneten Probenträgern, wie beispielsweise in Titerplatten angeordnet. Eine Betrachtung bzw. Untersuchung der Probe erfolgt häufig durch einen transparenten Probenträgerboden. Die Betrachtung durch einen Probenträgerboden hat beispielsweise den Vorteil, dass das Betrachtungsobjektiv unterhalb des Probenträgers angeordnet sein kann, während oberhalb des Probenträgers beispielsweise Pipettiereinrichtungen zum Zuführen der Proben oder andere Einrichtungen vorgesehen werden können.

Bei genauen Untersuchungsmethoden, bei denen insbesondere Hochleistungsobjektive, die beispielsweise eine numerische Apparatur von mehr als 0,7 aufweisen eingesetzt werden, hat das Untersuchen der Probe durch einen transparenten Probenträgerboden jedoch den Nachteil, dass sowohl die Dicke als auch der Brechungsindex des Probenträgerbodens den Verlauf des Strahlengangs beeinträchtigen. Bei einer derartigen Beeinträchtigung kann sich die Größe und/oder Form des Messvolumens, das innerhalb einer beispielsweise flüssigen Probe angeordnet ist, verändern. Hierdurch treten Verfälschungen der Messergebnisse auf.

Insbesondere bei der Fluoreszenz-Spektroskopie, bei der beispielsweise die Fluoreszenz von durch einen Laser oder eine andere Lichtquelle bestrahlten Stoffen zur Erzielung von Messergebnissen genutzt wird, führen bereits sehr geringe Größen und/oder Formveränderungen des Messvolumens zu einer Verschlechterung der Messergebnisse. Versuche haben gezeigt, dass bereits bei einer Änderung der Dicke des transparenten Probenträgerbodens um mehr als 5 $\mu$m und/oder bei einer Änderung des Brechungsindexes des Probenträgerbodens an der dritten Stelle hinter dem Komma die Fokusqualität derart verschlechtert wird, dass eine Verschlechterung der Messergebnisse eintritt.

Zur Korrektur der Dicke des Probenträgerbodens ist es bekannt, an einem Korrekturring des Objektivs von Hand eine nominelle Dicke des Probenträgerbodens einzustellen. Hierzu ist an dem entsprechenden Korrekturring des Objektivs eine Skala vorgesehen, an der die vom Hersteller des Probenträgers angegebene Dicke des Probenträgerbodens eingestellt werden kann. Hier handelt es sich um ein äußerst aufwendiges Vorgehen, da zur Erzielung akzeptabler Messergebnisse für jeden Probenträger von einem Bediener des Gerätes überprüft werden muss, ob sich die vom Hersteller angegebene Dicke des Probenträgerbodens verändert hat. Ein weiterer Nachteil dieses Vorgehens besteht darin, dass ungenaue Angaben des Herstellers nicht festgestellt werden und somit eine unbemerkte Verfälschung der Messergebnisse auftreten kann. Insbesondere können bei der manuellen Einstellung mit Hilfe eines Korrekturrings an dem Objektiv Schwankungen der Dicke innerhalb eines Probenträgerbodens nicht korrigiert werden. Ein weiterer Nachteil besteht darin, dass bei der Einstellung der nominellen Dicke des Probenträgerbodens an dem Korrekturring der Brechungsindex des Probenträgerbodens nicht berücksichtigt wird. Eine geringfügige Materialänderung des Probenträgerbodens, die bereits zu relevanten Änderungen des Brechungsindexes führen kann, kann daher mit Hilfe des Korrekturrings nicht berücksichtigt werden.

Aus WO 00/46590 ist ein Autofokussystem für ein Mikroskop bekannt. Hierbei wird zur Verschiebung des Autofokus der Probenträger relativ zum Objektiv verschoben. Dies erfolgt unter Berücksichtigung der vom Hersteller genannten Dicke des Probenträgerbodens, so dass der Fokus der Innenseite des Probenträgerbodens innerhalb des Wells angeordnet wird.

Aufgabe der Erfindung ist es, ein Verfahren zur Korrektur der Größe und/oder Form eines Messvolumens in einer chemischen und/oder einer biologischen Probe zu schaffen, bei welchem durch einen Probenträgerboden, insbesondere durch dessen Dicken- und/oder Brechungsindex-Änderungen, hervorgerufene Beeinträchtigungen korrigiert werden. Ferner ist es Aufgabe der Erfindung, eine Vorrichtung zur Durchführung des Verfahrens zu schaffen.

Die Lösung der Aufgabe erfolgt erfindungsgemäß durch die Merkmale des Anspruchs 1.

Bei einer ersten Ausführungsform des erfindungsgemäßen Verfahrens wird ein innerhalb der Probe angeordnetes Messvolumen mit Hilfe einer Beobachtungsoptik auf eine Detektoreinrichtung abgebildet. Insbesondere bei der Fluoreszenz-Spektroskopie, die beispielsweise im Hochdurchsatz-Screening eingesetzt wird, weisen die Messvolumina vorzugsweise eine Größe von weniger als 20 fl, insbesondere weniger als 10 fl auf. Im nächsten Schritt des erfindungsgemäßen Verfahrens erfolgt ein automatisches Bestimmen der Dicke der Probenträgerwand, wie beispielsweise des Probenträgerbodens, durch den die Messung stattfindet. Das Bestimmen der Dicke der Probenträgerwand kann beispielsweise durch Ultraschall- eine Wirbelstrom- oder eine kapazitive Dickenmessung erfolgen. Im nächsten Schritt erfolgt sodann ein automatisches Verschieben zumindest einer Linse in Richtung einer optischen Achse der Beobachtungsoptik. Das Maß der Verschiebung erfolgt in Abhängigkeit der zuvor bestimmten Dicke der Probenträgerwand. Hierdurch erfolgt eine automatische Korrektur der Größe und/oder Form des Messvolumens in Abhängigkeit der optischen Dicke der Probenträgerwand.

Vorzugsweise wird bei dem Maß der Verschiebung der Linse die Dicke der Probenträgerwand insbesondere hinsichtlich ihrer optischen Dicke, d.h. unter Berücksichtigung des Brechungsindexes, verschoben. Es ist somit besonders bevorzugt, nicht nur die physikalische, sondern auch die optische Dicke der Probenträgerwand zu berücksichtigen. Hierzu kann aus der beispielsweise durch das vorstehende Verfahren bestimmten physikalischen Dicke unter Berücksichtigung des Brechungsindexes die optische Dicke berechnet werden. Dies ist beispielsweise möglich, wenn der Brechungsindex bekannt ist. Häufig wird der Brechungsindex vom Hersteller der verwendeten Probenträgerwand, die beispielsweise aus Glas ist, angegeben. Ferner ist es möglich, den Brechungsindex unmittelbar zu bestimmen. Dies hat den Vorteil, dass auch Schwankungen gegenüber den Herstellerangaben berücksichtigt werden können. Dies kann beispielsweise dadurch erfolgen, dass die seitliche Ablenkung eines durch den Probenträgerboden geführten Strahls bestimmt wird. Zur genaueren Bestimmung des Brechungsindex kann der Strahl mehrfach durch den Probenträgerboden gelenkt werden. Dies hat ferner den Vorteil, dass ein Detektor zum Bestimmen der seitlichen Verschiebung des Strahls auf derselben Seite des Probenträgers wie eine den Strahl erzeugende Beleuchtungseinrichtung angeordnet sein kann.

Das erfindungsgemäße Verfahren zur Korrektur der Größe und/oder Form eines Messvolumens wird vorzugsweise bei jedem Probenträger durchgeführt. Insbesondere beim Screening, wie beim Hightroughput-Screening oder Mediumtroughput-Screening, bei welchem Titerplatten mit einer Vielzahl von Proben, beispielsweise 1536 oder 2080 Proben gemessen werden, erfolgt die Durchführung des Verfahrens mindestens einmal, vorzugsweise mehrmals je Titerplatte. Als Probenträger können ferner auch Chips mit Kanalstrukturen und dgl. verwendet werden.

Vorzugsweise erfolgt das Bestimmen der Dicke des Probenträgers durch Bewegen eines Beleuchtungsfokus, d.h. eines Brennpunktes einer Optikeinrichtung durch die Probenträgerwand. Die Bewegung kann durch Bewegen des Probenträgers und/oder Bewegen des Beleuchtungsfokus mit Hilfe einer Optikeinrichtung erfolgen. Bei der Bewegung des Beleuchtungsfokus durch die Probenträgerwand werden an den Grenzflächen des Probenträgers auftretende Reflexe detektiert. Aufgrund der auftretenden Reflexe kann eine Dicke der Probenträgerwand bestimmt werden. Bei dieser Dicke handelt es sich um eine den Brechungsindex der Probenträgerwand berücksichtigende Dicke, so dass bereits eine sehr gute Korrektur erzielt werden kann. Bei durch die auftretenden Reflexe bestimmten Dicke der Probenträgerwand handelt es sich jedoch nicht unbedingt um die optische Dicke der Probenträgerwand. Zur Bestimmung der optischen Dicke muss im allgemeinen eine weitere Berechnung erfolgen, in der der Brechungsindex der Probenträgerwand berücksichtigt wird. Der Brechungsindex ist entweder bekannt oder kann wie vorstehend beschrieben bestimmt werden. Aufgrund der gemessenen Dicke der Probenträgerwand erfolgt sodann ein automatisches Verschieben zumindest einer Linse in Richtung einer optischen Achse der Beobachtungsoptik, so dass die Größe und/oder Form des Messvolumens korrigiert ist.

Das Bestimmen der Dicke des Probenträgers kann durch eine gesonderte Beobachtungsoptik erfolgen. Vorzugsweise wird jedoch die vorhandene Optik eines Mikroskops oder einer anderen Beobachtungseinrichtung verwendet. Insbesondere bei Hochdurchsatz-Screening-Verfahren kann die Beleuchtungseinrichtung, wie beispielsweise ein Laser, mit dem die zu untersuchende Probe zur Fluoreszenz angeregt wird, auch zur Bestimmung der Dicke des Probenträgerbodens verwendet werden. Hierzu wird beispielsweise in dem Strahlengang der Beobachtungsoptik ein Strahlteiler vorgesehen, durch den das von der Probenträgerwand reflektierte Licht aus dem Mess-Strahlengang ausgekoppelt und auf einen geeigneten Detektor gelenkt wird. Insbesondere ist vor dem Detektor eine Lochblende angeordnet, um eine axiale Auflösung der reflektierten Strahlen zu ermöglichen.

Das Verfahren des Beleuchtungsfokus durch die Probenträgerwand erfolgt vorzugsweise schrittweise oder kontinuierlich.

Bei dem Messvolumen kann es sich in Abhängigkeit der durchzuführenden Messungen um ein relativ großes Volumen handeln. Insbesondere handelt es sich jedoch bei dem Messvolumen um den Fokus der Beobachtungsoptik. Hierbei ist der Brennpunkt der Beobachtungsoptik als Messvolumen innerhalb der Probe angeordnet. Dies wird insbesondere beim Hochdurchsatz-Screening angewendet, da es aufgrund eines sehr kleinen Fokus möglich ist, Proben von wenigen $\mu$l innerhalb von Probenaufnahmebereichen (Wells) von Titerplatten zu untersuchen, ohne das störende Reflexe an den Innenwänden der Wells auftreten.

Insbesondere bei der Fluoreszenz-Spektroskopie oder anderen die Fluoreszenz von Stoffen nutzenden Verfahren ist es möglich, die elektromagnetische Strahlung, die zur Anregung von in der Probe enthaltenen fluoreszierenden Partikeln dient, auch zur Bestimmung der Dicke des Probenträgers zu verwenden.

Besonders bevorzugt ist es, zur Korrektur der Größe und/oder der Form des Messvolumens die optische Dicke der Probenträgerwand zu berücksichtigen.

Ebenso ist es möglich, die Korrektur der Größe und/oder Form eines Messvolumens in einer chemischen und/oder biologischen Probe nicht durch direkte Messung der Dicke der relevanten Probenträgerwand, durch die die Messung/Untersuchung der Probe erfolgt, durchzuführen, sondern unmittelbar durch Detektieren der Größe des Messvolumens. Hierbei erfolgt somit gleichzeitig eine Korrektur der Dicke der Probenträgerwand unabhängig vom tatsächlichen

Brechungsindex der Probenträgerwand. Dieses Verfahren ist insbesondere bei der Fluoreszenz-Spektroskopie und besonders bevorzugt beim Screening, wie Hightroughput- und Mediumtroughput-Screening, zur Untersuchung sehr kleiner Probenvolumina geeignet.

Hierbei werden die in einem Probenträger, wie beispielsweise einem Well einer Titerplatte oder eines Kanals oder dgl. eines Chips angeordneten Proben mit elektromagnetischer Strahlung zur Fluoreszenz-Anregung von in der Probe vorhandenen Partikeln bestrahlt. Bei den Partikeln handelt es sich beispielsweise um Fluoreszenz-Marker, Farbstoff-Marker oder Stoffe der Probe, die unmittelbar, d.h. ohne Vorsehen eines Markers fluoreszieren. Durch das Anregen mit elektromagnetischer Strahlung erfolgt eine Abgabe von Fluoreszenz-Strahlung durch die entsprechenden angeregten Partikel. Im nächsten Schritt wird das innerhalb der Probe angeordnete Messvolumen mit Hilfe einer Beobachtungsoptik auf eine Detektoreinrichtung, wie beispielsweise eine CCD-Kamera, vorzugsweise einen Detektor mit Einzelphotonenauflösung, wie z.B. PMT- oder APD-Detektoren, abgebildet. Hierbei erfolgt die Abbildung durch eine Probenträgerwand, wie beispielsweise den Probenträgerboden, der beispielsweise aus Glas oder einem transparenten Kunststoff hergestellt sein kann.

Bei dieser bevorzugten Ausführungsform erfolgt im nächsten Schritt ein automatisches Verschieben mindestens einer Linse in Richtung der optischen Achse der Beobachtungsoptik, so dass die Größe und/oder Form des Messvolumens verändert wird. Durch Verändern der Größe des Messvolumens ändert sich die von einer Detektoreinrichtung wahrgenommene Strahlungsmenge. Dies beruht auf der Erkenntnis, dass die Fluoreszenz eines Partikels, beispielsweise eines Moleküls zu der Beleuchtungsintensität proportional ist. Je kleiner das Messvolumen ist, desto stärker ist die Beleuchtungsdichte in dem Messvolumen. Dies hat zur Folge, dass die Strahlungsintensität des einzelnen Partikels bzw. Moleküls zunimmt.

Aufgrund der beim automatischen Verschieben der mindestens einen Linse der Beobachtungsoptik festgestellten Schwankungen der Strahlungsintensität der im Messvolumen befindlichen Partikel/Moleküle, d.h. der Strahlungsmenge, kann die Linse automatisch in eine Stellung erschoben werden, bei der maximale Strahlungsintensität auftritt. Dies führt zur Korrektur der Dicke der Probenträgerwand, da bei einer maximalen Strahlungsintensität der Partikel/Moleküle das Messvolumen minimal ist. Hierbei wird der Brechungsindex sowie die optische Dicke der Probenträgerwand automatisch ohne zusätzliche Berechnung berücksichtigt. Insbesondere wird bei dieser Ausführungsform des erfindungsgemäßen Verfahrens beispielsweise auch ein an der Probenträgerwand vorgesehenes Emissionsmedium oder dergleichen berücksichtigt.

Die Einstellung des minimalen Messvolumens kann hierbei in vorgegebenen Grenzen erfolgen, wenn beispielsweise eine Mindestgröße des Messvolumens gewünscht ist. Vorzugsweise wird der Fokus der Beobachtungsoptik in der zu messenden Probe angeordnet, so dass der Fokus dem Messvolumen entspricht und mit Hilfe der erfindungsgemäßen Verfahrens minimiert werden kann.

Bei einer Bestimmung der Strahlungsintensität kann es vorkommen, dass trotz sich ändernder Größe des Messvolumens keine signifikanten Änderungen der Gesamtzahl der detektierten Photonen (Strahlungsmenge) auftreten. Dies ist beispielsweise der Fall, wenn aufgrund der Verkleinerung des Messvolumens zwar die Anzahl der angeregten Moleküle sinkt, diese jedoch durch die Vergrößerung der Beleuchtungsintensität stärker angeregt werden. Die beiden Effekte können sich annähernd ausgleichen, so dass die genaue Bestimmung der optimalen bzw. minimalen Größe des Messvolumens nicht möglich ist. Vorzugsweise wird daher zusätzlich oder anstatt der Bestimmung der Strahlungsintensität die Intensitätsschwankung bestimmt. Durch das Bestimmen der Intensitätsschwankung über der Zeit kann die Größe des Messvolumens näher bestimmt werden. Bei einem beispielsweise relativ großen Messvolumen werden durch Eintreten und Austreten einzelner Moleküle oder fluoreszierender Partikel keine großen Schwankungen hervorgerufen, da innerhalb des großen Messvolumens eine große Anzahl an fluoreszierenden Partikeln enthalten ist und durch das Ein- oder Austreten einzelner Moleküle die prozentuale Änderung an Partikel innerhalb des Messvolumens gering ist. Dementsprechend ist auch die Intensitätsschwankung bei einem relativ großen Messvolumen gering. Im Gegensatz hierzu sind bei kleinen Messvolumina die Schwankungen aufgrund eines eintretenden und/oder austretenden fluoreszierenden Partikels erheblich größer. Tritt in ein Messvolumen, in dem beispielsweise nur drei fluoreszierende Partikel enthalten sind, ein vierter fluoreszierender Partikel ein, erhöht sich die Intensität etwa 1/3. Vorzugsweise wird die Lage des Messvolumens, d.h. vorzugsweise des Messfokus bei maximaler Intensitätsschwankung eingestellt, da die Größe des Messvolumens hierbei minimal ist. Hierbei wird vorzugsweise die Amplitude der Intensitätsschwankung bestimmt.

Vorzugsweise erfolgt eine Berechnung der Größe/Form des Messvolumens mit Hilfe einer Berechnungseinrichtung auf der Grundlage der Gleichung

$$\frac{<I^2(t)> - <I(t)>^2}{<I(t)>^2},$$

mit:

$<I^2(t)>$: Mittelwert der quadratischen Funktion,

$<I(t)>^2$: Quadrat des Mittelwertes der Funktion,

$I(t)$: zeitlicher Verlauf der Funktion, wobei I = Intensität einer Funktion der Zeit t ist, und

$< >$: Bildung des Mittelwertes.

Eine Vorrichtung zur Durchführung der erfindungsgemäßen Verfahren weist eine Beobachtungsoptik zur Beobachtung des Messvolumens, das beispielsweise in einem Well einer Titerplatte angeordnet ist, auf. Ferner ist eine Detektoreinrichtung zum Detektieren der von der Probe abgegebenen Strahlung und/oder der von der Probenträgerwand hervorgerufenen Reflexe vorgesehen. Ferner ist eine Verstelleinrichtung zum automatischen Verschieben mindestens einer Linse in Richtung der optischen Achse der Beobachtungsoptik vorgesehen. Hierdurch kann ein Verändern der Größe des Messvolumens oder ein Bewegen eines Fokus durch die Probenträgerwand erfolgen. Mit Hilfe einer Steuereinrichtung erfolgt eine Steuerung der Verstelleinrichtung und damit der Lage mindestens einer Linse in Bezug auf die optische Achse der Beobachtungseinrichtung, in Abhängigkeit der von der Detektoreinrichtung erfassten Strahlung.

Vorzugsweise weist die Beobachtungsoptik einen von der Verstelleinrichtung betätigbaren Verstellring zum Verschieben der mindestens einen Linse auf. Es kann sich hierbei beispielsweise um den zur Einstellung eines Korrekturwertes per Hand bekannten Korrekturring handeln, der über eine geeignete Verstelleinrichtung automatisch betätigt wird. Dies hat den Vorteil, dass bestehende Beobachtungsoptiken nachgerüstet werden können, so dass die erfindungsgemäßen automatischen Verfahren nach einer Nachrüstung bestehender Untersuchungseinrichtungen durchgeführt werden können.

Nachfolgend wird die Erfindung anhand einer bevorzugten Ausführungsform unter Bezugnahme auf die anliegenden Zeichnungen näher erläutert.

Es zeigen:

Fig. 1    eine schematische Darstellung eines im Probenvolumen angeordneten Messvolumens,

Fig. 2    einen schematischen prinzipiellen Aufbau der Vorrichtung, zur Durchführung des erfindungsgemäßen Verfahrens,

Fig. 3    ein schematisches Diagramm der Intensität über der Zeit, und

Fig.4    eine schematische, perspektivische Ansicht einer bevorzugten Ausführungsform der Vorrichtung.

Innerhalb eines Wells 10, d.h. einer zumeist zylindrischen Vertiefung in einer Titerplatte 12, ist eine zu untersuchende chemische und/oder biologische Probenflüssigkeit 14 angeordnet. Die Titerplatte 12 ist mit einem transparenten, vorzugsweise aus Glas bestehenden Probenträgerboden 16 verschlossen. Wird zur Untersuchung der Probe 14 kein sichtbares Licht verwendet, muss der Bodenträgerboden nicht transparent sein. Es ist hierbei ausreichend, wenn der Bodenträgerboden 16 für die eingesetzte Strahlung durchlässig ist.

Ein von einer Beleuchtungseinrichtung und durch eine Optikeinrichtung in der Probe 14 erzeugtes Messvolumen in Form des Fokus 20 der Beobachtungseinrichtung weist im Idealfall eine äußerst kleine, annähernd punktförmige Größe auf. Der Fokus bzw. Brennpunkt 20 ist innerhalb der Probe 14 anzuordnen. Der Fokus selbst weist eine gewisse Ausdehnung auf, die durch in einem Probenträgerboden 16 auftretende Brechung des Strahlengangs verändert wird.

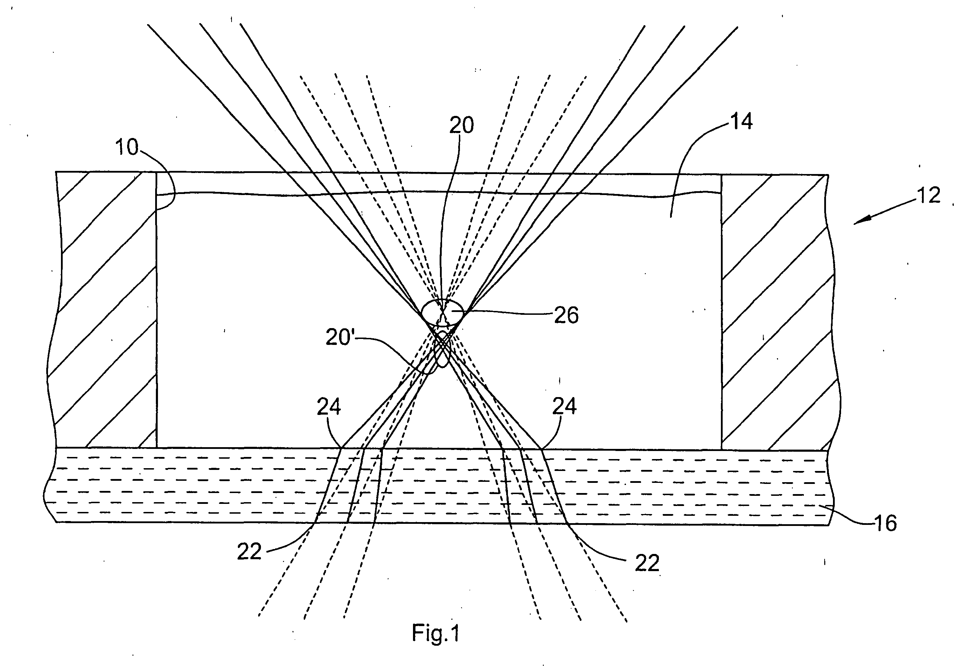

Ein unverfälschter Strahlengang ist in Fig. 1 gestrichelt dargestellt. Hieraus ergibt sich die dargestellte Größe des Messvolumens als Fokus 20. Durch den Probenträgerboden erfolgt an den Grenzfläche, d.h. zwischen dem Mediumsübergang von beispielsweise Luft in Glas, d.h. an den Punkten 22 eine Brechung der Strahlen. Die Strahlen werden bei Austritt aus dem Probenträgerboden wiederum aufgrund des Vorhandenseins zweier unterschiedlicher Medien (z.B. Glas und Probenflüssigkeit) an den Punkten 24 erneut gebrochen. Hieraus ergibt sich ein vergrößertes als durchgezogene Linie 26 dargestellte Messvolumen. Die Vergrößerung des Meßvolumens erfolgt durch eine durch vorstehend beschriebene Brechungen hervorgerufene Verschiebung und Verzerrung des Fokus 20 in den Bereich 20'. Da eine Beobachtungsoptik jedoch den Brennpunkt 20 bzw. die entsprechende in Fig. 1 horizontale Ebene beobachtet, wird der vergrößerte Fokus 26 wahrgenommen.

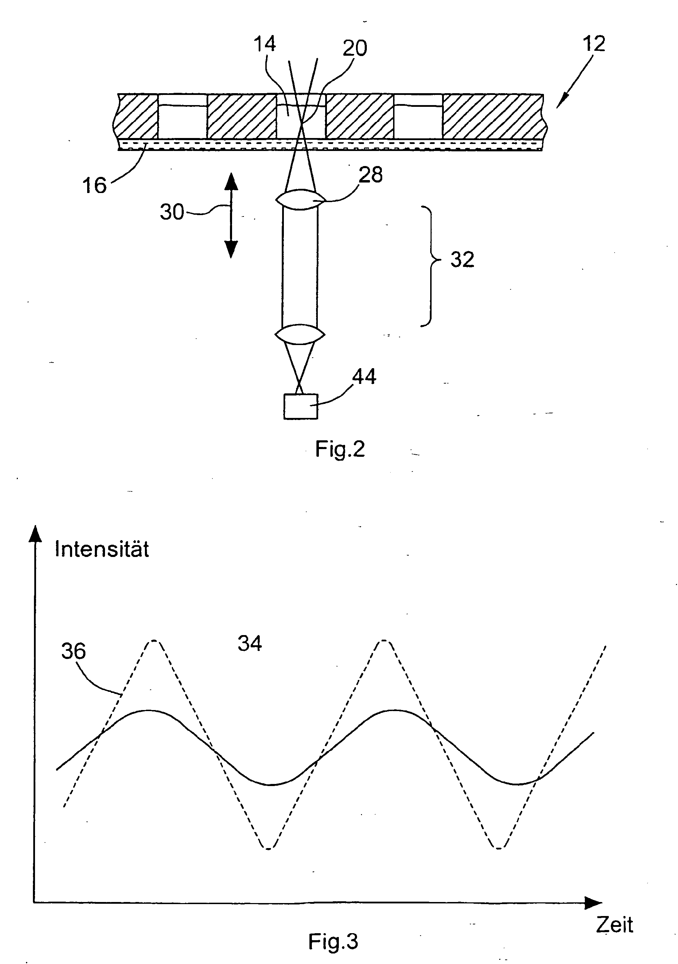

Durch Verschieben einer Linse 28 (Fig. 2) in Richtung eines Pfeils 30, d.h. in Richtung einer optischen Achse einer Beobachtungsoptik 32 kann die Größe des Fokus 20 verändert werden.

Eine bevorzugte Optimierung der Größe des Messvolumens erfolgt durch Messung der Intensitätsschwankung innerhalb des Fokus 20, vorzugsweise mit Hilfe einer höheren Momenten-Analyse.

In Fig. 3 sind zwei Kurven 34,36 dargestellt, aus denen der prinzipielle Unterschied eines kleinen und eines großen Fokus bzw. Messvolumens ersichtlich ist. Bei einem relativ großen Fokus erfolgt eine Intensitätsschwankung entsprechend der Kurve 34 mit einer relativ geringen Amplitude. Dies ist dadurch begründet, dass bei einem relativ großen Fokus, in dem sich beispielsweise 20 fluoreszierende Partikel befinden, eine Änderung der Partikelanzahl um ein oder zwei fluoreszierende Partikel nur geringfügig bemerkbar macht.

Bei einem kleineren Fokus erfolgt eine Intensitätsschwankung, wie sie anhand der gestrichelt dargestellten Kurve 36 prinzipiell ersichtlich ist. Die Intensitätsschwankung ist hierbei erheblich stärker, da beispielsweise bei einem kleinen Fokus, in dem sich nur drei fluoreszierende Partikel befinden, bereits das Ein- oder Austreten eines einzelnen Partikels in diesen Fokus eine erhebliche Steigerung der Fluoreszenz hervorruft. Aufgrund der erfindungsgemäßen Anwendung der höheren Momenten-Analyse zur Untersuchung der Intensitätsschwankungen kann auf einfache Weise mit Hilfe einer Steuereinheit die Linse 28 (Fig. 2) verschoben werden, um die gewünschte Größe eines Messvolumens, vorzugsweise die minimale Größe des Messvolumens 18 einzustellen.

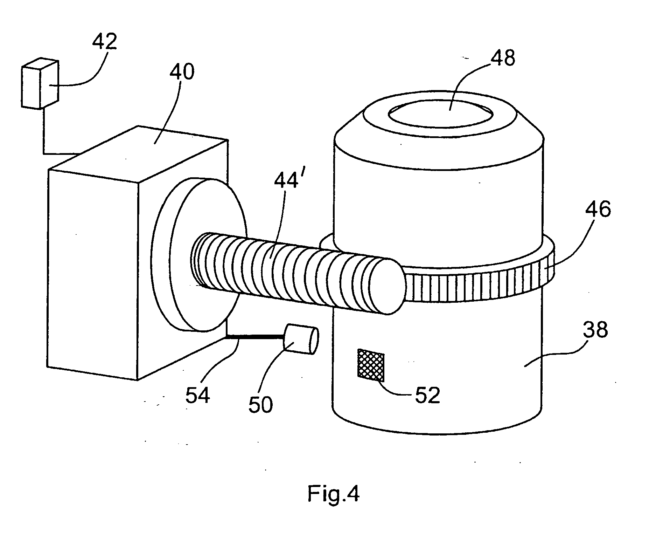

Zum Verschieben der in einem Objektiv 38 (Fig. 4), das der Beobachtungsoptik 32 entspricht, angeordneten Linse 28 wird vorzugsweise eine Verstelleinrichtung 40 eingesetzt, die mit einer Steuereinrichtung 42 verbunden ist. Durch die Steuereinrichtung 42, die mit einem Detektor 44 (Fig. 2) verbunden ist, erfolgt die Bestimmung der erforderlichen Verschiebung der Linse 28 in dem Objektiv 38. Die Steuereinrichtung 42 steuert die Verstelleinrichtung, die vorzugsweise eine Übertragungseinrichtung 44' in Form eines Schneckenantriebs aufweist. Der Schneckenantrieb greift in einen Verstellring 46 ein. Bei dem Verstellring 46 kann es sich um den beispielsweise gerändelten Verstellring eines bekannten Objektivs handeln, bei dem von Hand mit Hilfe des Verstellrings eine Verschiebung der Linse 28 erfolgen kann, um die Dicke eines Probenträgerbodens 16 auszugleichen. Durch Drehen des Schneckenantriebs 44', der in den Verstellring 46 eingreift, erfolgt eine Drehung des Verstellrings 46 und somit eine Verschiebung der in dem Objektiv 38 angeordneten Linse 28. Hierdurch wird wie vorstehend beschrieben die Größe des Fokus 20 variiert.

Die in Fig. 4 dargestellte Vorrichtung kann somit das erfindungsgemäße Verfahren, bei dem die Dicke des Probenträgerbodens 16 unabhängig von einer von der Probe abgegebenen Strahlung erfolgt sowie für das erfindungsgemäße Verfahren, bei dem mit Hilfe der Strahlungsintensität und/oder der Intensitätsschwankung eine Einstellung der Größe des Fokus 20 erfolgt eingesetzt werden.

Sofern es sich um ein Objektiv 38 handelt, bei dem ein Drehen des Verstellringes 46 eine Bewegung einer Austrittslinse 48 hervorruft, ist vorzugsweise ein Endschalter 50 vorgesehen, um eine Beschädigung der Objektivmechanik zu verhindern. Bei dem Endschalter kann es sich beispielsweise um einen geeigneten Sensor handeln, der Lichtstahlen in Richtung des Objektivs 38 abgibt. Sobald eine reflektierende Referenzfläche 52, die an dem Objektiv 32 angebracht ist, in den Bereich des Sensors 50 gelangt, erzeugt der Sensor 50 ein Signal, das über eine Leitung 54 an die Verstelleinrichtung 40 übermittelt wird. Durch das Signal erfolgt ein Anhalten des Schneckenantriebs 44.

## Patentansprüche

1. Verfahren zur Korrektur der Größe und/oder Form eines Messvolumens in einer chemischen und/oder biologischen Probe (14), insbesondere bei der Fluoreszenz-Spektroskopie, mit den Schritten:

   - Abbilden eines innerhalb der Probe (14) angeordneten Messvolumens mit Hilfe einer Beobachtungsoptik (32) auf eine Detektoreinrichtung (44), wobei die Abbildung durch eine Probenträgerwand (16) eines die Probe (14) enthaltenden Probenträgers (12) erfolgt,

   - automatisches Bestimmen der Dicke der Probenträgerwand (16) und
   - automatisches Verschieben zumindest einer Linse (28) in Richtung einer optischen Achse der Beobachtungsoptik (32) zur Korrektur der Größe und/oder Form des Messvolumens in Abhängigkeit der Dicke der Probenträgerwand (16).

2. Verfahren nach Anspruch 1, bei welchem die optische Dicke der Probenträgerwand (16) bestimmt wird.

3. Verfahren nach Anspruch 1 oder 2, bei welchem die Dicke der Probenträgerwand (16) bestimmt wird durch:

   - Bewegen eines Beleuchtungsfokus (20) mit Hilfe einer Optikeinrichtung (32) durch die Probenträgerwand (16) und
   - Detektieren der beim Bewegen des Beleuchtungsfokus (20) an Grenzflächen des Probenträgers (16) auftretenden Reflexe.

4. Verfahren nach Anspruch 3, bei welchem das Bewegen des Beleuchtungsfokus (20) mittels der Beobachtungsoptik (32) erfolgt.

5. Verfahren nach Anspruch 3 oder 4, bei welchem der Beleuchtungsfokus (20) schrittweise oder kontinuierlich durch die Probenträgerwand bewegt wird.

6. Verfahren nach einem der Ansprüche 1-5, bei welchem der Fokus (20) der Beobachtungsoptik (32) das Messvolumen bildet.

7. Verfahren nach einem der Ansprüche 1-6, bei welchem die Linse (28) mit Hilfe eines hochpräzisen elektrischen Antriebs (40) verschoben wird.

8. Verfahren nach einem der Ansprüche 1-7, bei welchem die Probe (14) mit elektromagnetischer Strahlung zur Fluoreszenz-Anregung von in der Probe (14) vorhandenen Partikeln bestrahlt wird.

9. Verfahren nach Anspruch 8, bei welchem die elektromagnetische Strahlung zur Bestimmung der Dik- ke und/oder der optischen Dicke der Probenträgerwand (16) verwendet wird.

10. Verfahren nach einem der Ansprüche 1-9, bei welchem insbesondere beim Screening-Prozess, wie beim Highthroughput-Screening oder Mediumthroughput-Sceening, die Dicke der Probenträgerwand (16) jedes Probenträgers (12) mindestens einmal, vorzugsweise mindestens dreimal und besonders bevorzugt mindestens fünfmal bestimmt wird.

## Claims

**1.** Method for correcting the size and/or shape of a measuring volume in a chemical and/or biological sample (14), especially in fluorescence spectroscopy, comprising the steps of:

- imaging a measuring volume located within the sample (14) to a detector means (44), using observing optics (32), the imaging being effected through a sample carrier wall (16) of a sample carrier (12) containing the sample (14),
- automatically determining the thickness of the sample carrier wall (16), and
- automatically shifting at least one lens (28) along an optical axis of the observing optics (32) to correct the size and/or shape of the measuring volume as a function of the thickness of the sample carrier wall (16).

**2.** Method of claim 1, wherein the optical thickness of the sample carrier wall (16) is determined.

**3.** Method of claim 1 or 2, wherein the thickness of the sample carrier wall (16) is determined by:

- moving an illumination focus (20) through the sample carrier wall (16) using an optical means (32), and
- detecting the reflections occurring at the interfaces of the sample carrier (16) when moving the illumination focus (20).

**4.** Method of claim 3, wherein the illumination focus (20) is moved by means of the observing optics (32).

**5.** Method of claim 3 or 4, wherein the illumination focus (20) is moved incrementally or continuously through the sample carrier wall.

**6.** Method of one of claims 1-5, wherein the focus (20) of the observation optics (32) defines the measuring volume.

**7.** Method of one of claims 1-6, wherein the lens (28) is displaced using a high-precision electric drive (40).

**8.** Method of one of claims 1-7, wherein the sample (14) is irradiated with electromagnetic radiation to excite fluorescence in particles present in the sample (14).

**9.** Method of claim 8, wherein the electromagnetic radiation is used to determine the thickness and/or the optical thickness of the sample carrier wall (16).

**10.** Method of one of claims 1-9, wherein, especially in a screening process such as in high-throughput screening or medium-throughput screening, the thickness of the sample carrier wall (16) of each sample carrier (12) is determined at least once, preferably at least three times and most preferably at least five times.

## Revendications

**1.** Procédé pour corriger la taille et/ou la forme d'un volume de mesure ans un échantillon (14) chimique et/ou biologique, notamment dans la spectroscopie de fluorescence, le procédé comprenant les étapes suivantes:

- reproduire un volume de mesure situé dans l'échantillon (14) sur un dispositif détecteur (44) en utilisant une optique d'observation (32), la reproduction étant effectuée à travers une paroi du porte-échantillon (16) d'un porte-échantillon (12) contenant l'échantillon (14),
- déterminer automatiquement l'épaisseur de la paroi du porte-échantillon (16) et
- déplacer automatiquement au moins une lentille (28) le long d'un axe optique de l'optique d'observation (32) pour corriger la taille et/ou la forme du volume de mesure en fonction de l'épaisseur de la paroi du porte-échantillon (16).

**2.** Procédé selon la revendication 1, dans lequel l'on détermine l'épaisseur optique de la paroi du porte échantillon (16).

**3.** Procédé selon la revendication 1 ou 2, dans lequel l'épaisseur de la paroi du porte-échantillon (16) est déterminé par:

- le déplacement d'un foyer d'éclairage (20) à travers la paroi du porte-échantillon (16) au moyen d'un dispositif optique (32) et
- la détection des réflexions apparaissant aux surfaces de limite du porte-échantillon (16) lorsque le foyer d'éclairage (20) est déplacé.

**4.** Procédé selon la revendication 3, dans lequel le déplacement du foyer d'éclairage (20) est effectué au moyen de l'optique d'observation (32).

**5.** Procédé selon la revendication 3 ou 4, dans lequel le foyer d'éclairage (20) est déplacé à travers la paroi du porte-échantillon en étapes ou continument.

**6.** Procédé selon l'une quelconque des revendications 1-5, dans lequel le foyer (20) de l'optique d'observation (32) forme le volume de mesure.

**7.** Procédé selon l'une quelconque des revendications 1-6, dans lequel la lentille (28) est déplacée au moyen d'un entrainement électrique (40) à haute précision.

8. Procédé selon l'une quelconque des revendications 1-7, dans lequel l'échantillon (14) est irradié par rayonnement électromagnétique afin d'exciter la fluorescence de particules présentes dans l'échantillon (14).

9. Procédé selon la revendication 8, dans lequel le rayonnement électromagnétique est utilisé pour déterminer l'épaisseur et/ou l'épaisseur optique de la paroi du porte-échantillon (16).

10. Procédé selon l'une quelconque des revendications 1-9, dans lequel, notamment dans un procès de criblage, comme le criblage à haut rendement ou le criblage à moyen rendement, l'épaisseur de la paroi du porte-échantillon (16) de chaque porte-échantillon (12) est déterminé au moins une fois, de préférence au moins trois fois, et, plus préféré, au moins cinq fois.

Fig.1

EP 1 446 654 B1

14  20  12

16

30

28

32

44

Fig.2

Intensität

36  34

Zeit

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0046590 A